# EUROPEAN PATENT SPECIFICATION

(11) **EP 2 943 749 B1**
(45) Date of publication and mention of the grant of the patent: **02.10.2019**
(21) Application number: 13870481.2
(22) Date of filing: 12.12.2013
(51) Int. Cl.: G01C 21/34, G01C 21/20, G01C 21/36

(54) **ITINERARY PLANNING FOR A VEHICLE**
ROUTENPLANUNG FÜR EIN FAHRZEUG
PLANIFICATION D'ITINÉRAIRE POUR UN VÉHICULE

(30) Priority: 08.01.2013 SE 1350013
(43) Date of publication of application: 18.11.2015
(73) Proprietor: Scania CV AB, 151 87 Södertälje (SE)
(72) Inventor: NORBERG, Jonas, SE-151 39 Södertälje (SE); AHO TARKKA, Adeliina, SE-115 30 Stockholm (SE); FAGERBERG, Kalle, SE-120 62 Stockholm (SE); JOHANSSON, Jonny, SE-147 71 Grödinge (SE); WIKMAN, Anders, SE-132 35 Saltsjö Boo (SE)
(74) Representative: Scania CV AB
(86) International application number: PCT/SE2013/051502
(87) International publication number: WO 2014/109690

(56) References cited:
- EP-A1- 1 039 429
- EP-A1- 1 870 672
- EP-A2- 1 005 006
- EP-A2- 1 065 472
- EP-A2- 1 308 694
- EP-A2- 2 428 772
- WO-A2-99/67761
- FR-A1- 2 721 738
- US-A- 4 733 356
- US-A- 6 124 826
- US-A- 6 125 326
- US-A1- 2002 152 027
- US-A1- 2003 135 325
- US-A1- 2003 144 794
- US-A1- 2005 027 442
- US-A1- 2010 057 358
- US-B1- 6 622 083

## Description

### TECHNICAL FIELD

The invention relates to a method, a system and programme associated with a vehicle. More specifically, the invention indicates a mechanism for planning of itineraries for a vehicle, from outside the vehicle.

### BACKGROUND

For the planning of routes or itineraries for a vehicle a navigational aid in the form of a navigation unit is often built into the vehicle. In the navigation system there is information which is important for planning a prospective route. This information may comprise various vehicle-related factors which might affect choice of journey route, e.g. the vehicle's total weight including cargo, or the vehicle's height. This information may for example rule out using the vehicle on certain routes because of road capacity restrictions.

This information in the vehicle's navigation system is accessed when a person is inside the vehicle with the navigation system activated.

Vehicle in this context means for example freight vehicle, long-distance truck, platform vehicle, delivery vehicle, lift truck, mobile home, pickup, work vehicle, passenger car, emergency vehicle, watercraft, van, four-wheeler, excavator, motorcar, passenger car, crane vehicle, tanker vehicle, motorcycle, wheel-mounted loader, moped, scooter, limousine, sports car, racing car, radio car, grass cutter, armoured car, snow scooter, snow weasel, cross-country vehicle, crawler vehicle, tractor, go-cart, bus, combine harvester, agricultural machine, amphibious watercraft, boat, ferry, cruise liner, submarine, aircraft, helicopter or other similar engine-powered manned or unmanned means of transport suited to geographical movement by land, sea or air.

A problem with information in the vehicle's navigation system being accessible only when a person is in vehicle is that this makes it difficult to plan routes from outside the vehicle. A person/driver may for example wish to plan a route in a relaxed café environment or other suitable location outside the vehicle, or at a time when he/she does not have access to the vehicle. He/she is then obliged to resort to extracting the aforesaid information manually from the vehicle's navigation system, e.g. by taking notes by hand, which is time-consuming, is liable to incorrect recording because of human factors and may well lead to the information, or part of it, being misleading. Manual transfer of information for subsequent input into another system is a well-known frequent source of error.

Incorrect choice of road may also lead to serious consequences. Driving a vehicle on a road which is subject to a maximum permissible load limit which the vehicle then exceeds may result in an accident in addition to the legal offence committed.

Document US 2005/027442 A1 discloses an agenda replicator system for travellers. Personal travel information from address books, appointment calendars, memo files and things-to-do lists may be selected by the user and placed in an agenda table. This personal travel information is then transferred to the vehicles navigation system, where a route is created by the vehicle navigation system, based on addresses to be visited and knowledge of desired arrival time. The user may also add certain personal preferences concerning the route, such as adequate cell phone coverage, minimising fuel consumption, places of interest, etc. These user preferences are then used by the vehicle navigation system to plan the route.

However, it would be desired to plan the route outside the vehicle and without being dependent on route planning based on algorithms by the vehicle navigation system.

Document EP 2428772 A2 presents a navigation device and a method of operating the same. Further, a method of operating a navigation system including a navigation device, a data server and an electronic device is provided. The navigation device includes a communication unit; a display; an input unit for receiving an input of data; a communication unit; and a controller for controlling operation of the display and the input unit. The controller connects to a data server through the communication unit, requests path setting information to the data server, receives the path setting information from the data server, acquires present position information of the navigation device, acquires a user moving path by reflecting the acquired position information and the received path setting information, and sets the user moving path as a guidance path. In this case, the path setting information is generated in another electronic device or the data server based on user input information input from the other electronic device.

The document seems to rather concern transferring position of a vehicle to another (vehicle external) entity, and guiding the driver to its destination from the vehicle external entity.

Document US 2010/057358 A1 concerns an apparatus for determining a route for a road vehicle for a user comprising: a database of information pertaining to roads, the information comprising geographic data that includes map, location and configuration data for the roads, the information further comprising data indicative of a plurality of road characteristics or limits that pertain to the roads; a program having a first operation that compares a multiplicity of selected characteristics or limits of the road vehicle to the data indicative of the plurality of road characteristics or limits contained within the database and a second operation that computes one or more authorised road routes for the road vehicle; wherein the program includes instructions that compute one or more unauthorised road routes or portions of unauthorized road routes having road characteristics that are not complementary to or do not match the selected characteristics or limits of the road vehicle.

It may be appreciated that much still remains to be done to facilitate a vehicle's itinerary planning.

### SUMMARY

An object of this invention is therefore to make it possible to plan a vehicle's itinerary from outside the vehicle, in order to solve at least one of the problems indicated above and thereby achieve a vehicle improvement.
A first aspect of the invention achieves the above object by a method of itinerary planning for a vehicle according to claim 1.
A second aspect of the invention achieves the object by a system of itinerary planning for a vehicle according to claim 7.
A third aspect of the invention achieves the object by a programme in a navigation unit installed in a vehicle for participation in itinerary planning for the vehicle according to claim 10.
A fourth aspect of the invention achieves the object by a programme in a portable unit, for itinerary planning for a vehicle according to claim 11.

Transferring navigation information from a vehicle to a portable unit makes it possible for itineraries to be planned in the portable unit. This enables the driver to plan his/her itinerary at any desired location without necessarily having to do so in the vehicle, on its navigation system. An improvement of the vehicle is thus achieved.

Other advantages and further novel features are indicated by the detailed description of the invention set out below.

### LIST OF DRAWINGS

The invention will now be described in more detail with reference to the attached drawings, which illustrate embodiments of the invention.
- **Figure 1A**: is an illustration of a vehicle and a portable unit according to an embodiment.
- **Figure 1B**: is an illustration of a vehicle and a portable unit according to an example.
- **Figure 2A**: is a synoptic illustration of itinerary planning according to an embodiment of the invention.
- **Figure 2B**: is a synoptic illustration of itinerary planning according to an embodiment of the invention.
- **Figure 3**: is a combined signalling and flow chart which illustrates an embodiment of the invention.
- **Figure 4**: is a flowchart which illustrates an embodiment of the invention.
- **Figure 5**: is an illustration of a system according to an embodiment of the invention.

### DETAILED DESCRIPTION OF THE INVENTION

The invention is defined as a method, a system and programme for itinerary planning for a vehicle, which may be implemented in any of the embodiments described below. This invention may however take many different forms and is not to be regarded as limited by the embodiments herein described, which are instead intended to illuminate and clarify various aspects of the invention. Further aspects and features of the invention may be indicated by the following detailed description when read in conjunction with the attached drawings. The drawings are nevertheless only to be regarded as examples of various embodiments of the invention and not as restricting the invention, which is limited only by the attached claims. Moreover, the drawings are not necessarily drawn to scale and are intended, if not stated otherwise, to conceptually illustrate aspects of the invention.

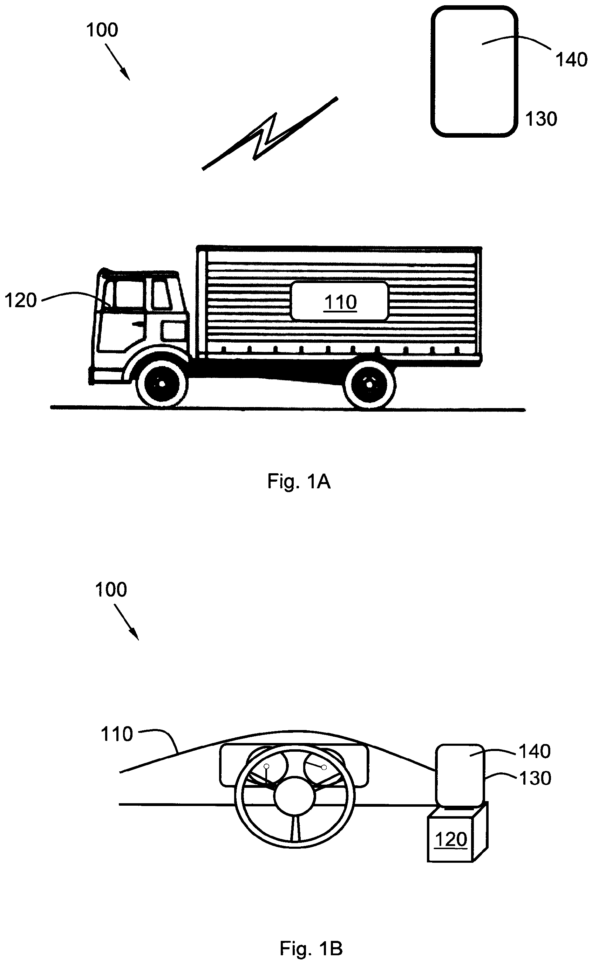

**Figure 1A** depicts a system **100** for itinerary planning by a driver of a vehicle **110.** To aid its navigation, the vehicle is provided with a navigation unit **120.** The system 100 comprises also a portable unit **130** with a viewing screen **140.** The portable unit 130 is arranged to communicate with the vehicle's navigation unit 120 in order to receive itinerary-related and/or vehicle-related information, and enable the driver to plan itineraries at any desired location outside the vehicle. In the example illustrated in Figure 1A, the portable unit 130 communicates wirelessly with the vehicle's navigation unit 120.

The wireless network may for example be based on any of the following technologies: Global System for Mobile Communications (GSM), Enhanced Data Rates for GSM Evolution (EDGE), Universal Mobile Telecommunications System (UMTS), Code Division Access (CDMA), (CDMA 2000), Time Division Synchronous CDMA (TD-SCDMA), Long Term Evolution (LTE); Wireless Fidelity (Wi-Fi), as defined by any of Institute of Electrical and Electronics Engineers (IEEE) standards 802.11 a, ac, b, g and/or n, Internet Protocol (IP), Bluetooth and/or Near Field Communication (NFC), according to different embodiments.

The invention thus makes it possible for navigation information to be transferred from the navigation unit 120 on board the vehicle 110 to a portable unit 130, e.g. a telephone, computer or surfboard, and hence for the vehicle's itineraries to be planned from outside the vehicle. The driver thus need not be in the vehicle when planning itineraries.

In certain embodiments of the invention, the navigation unit 120 will be connected to the portable unit 130 before the driver leaves the vehicle 110. The portable unit will then be sent information which may be useful for planning a new route, e.g. map data, previous destinations, attributes for different sections of road, e.g. load capacity classification, type of road, speed limits etc., points of interest (POIs) and/or vehicle information which has previously been stored or configured by the vehicle's driver or is read from sensors, e.g. the vehicle's weight, height, length, width, axle loads, presence of coupled trailers etc., dangerous goods and the like.

It is thus possible to avoid roads on which certain vehicles such as trucks and/or mobile homes are not allowed, narrow streets, low bridges and tunnels. Points of interest (POIs) may for example comprise filling stations, 24-hour shops or truck washes, or other locations which the driver has for various reasons put into the navigation system 120 on previous occasions.

The driver may then use the portable unit 130 to plan a new route, from outside the vehicle 110. When he/she returns to the vehicle with the portable unit 130, the navigation system 120 and the portable unit 130 can be reconnected to one another. Thereafter the navigation unit can be updated with the route planned in the portable unit and can present it for the driver when the vehicle is in motion.

In certain cases, large amounts of data may need to be transferred between the navigation unit 120 and the portable unit 130. In certain embodiments it may be of advantage to create a connection between the navigation unit and the portable unit, e.g. via a wireless network. This will make it possible for the portable unit to receive information from the navigation unit despite the information still being present in the navigation unit. When the driver makes a change in the portable unit, the navigation unit can in certain embodiments be updated immediately with each change.

The invention renders the navigation function of the vehicle 110 more flexible and more available. Being able to handle information from outside the vehicle enables the driver to plan itineraries where and when it suits him/her. If he/she has any questions, or wishes to discuss anything with another person, he/she can take the information out from the vehicle with him/her and show it to someone else on the portable unit's viewing screen 140.

**Figure 1B** depicts the system 100 for itinerary planning by the driver on board the vehicle 110 in an alternative example to the system 100 depicted in Figure 1A.

The portable unit 130 is here connectable to the navigation unit 120 via a wired interface.

The wired interface may for example be based on any of the following technologies on board the vehicle: Controller Area Network (CAN), Media Oriented Systems Transport (MOST), Ethernet. In certain alternative examples the wired interface may for example be based on any of the following technologies outside the vehicle: Ethernet, Universal Serial Bus (USB), Serial RS232, FireWire, Thunderbolt, to mention only some of the possibilities.

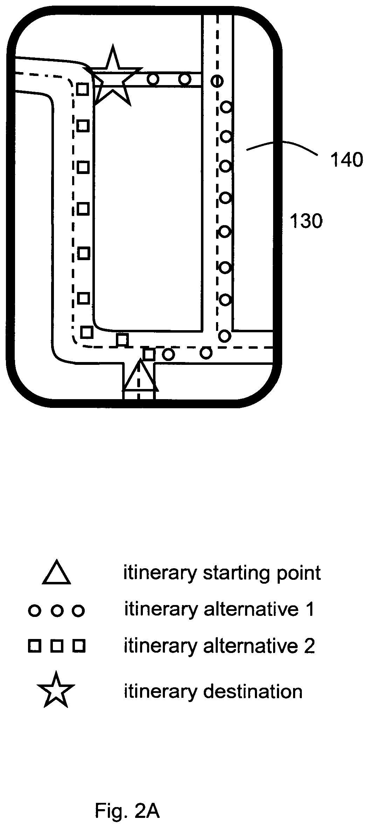

**Figure 2A** depicts a schematic example of itinerary planning for a vehicle 110, displayed on a viewing screen 140 of the portable unit 130.

In certain embodiments the driver may for example mark starting points and destinations for itineraries. This simplified example illustrates two alternative routes respectively represented in Figure 2A by circles and squares.

The example illustrated shows two alternative itineraries but is merely one example in one embodiment. In other embodiments a different number of alternative itineraries may appear.

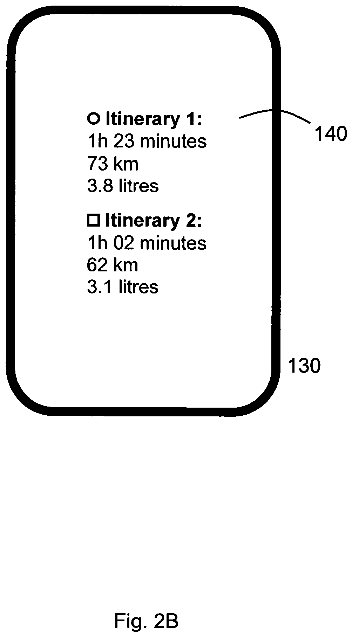

**Figure 2B** depicts a schematic example of itinerary planning for a vehicle 110, displayed on a viewing screen 140 of the portable unit 130.

The screen 140 displays here a comparison of two alternative itineraries between a certain starting point and destination. The driver may here for example compare calculated journey time, travelling distance and fuel consumption for the various alternative itineraries for the vehicle. These calculations will be based on the previously received information related to the vehicle and on map data. This also makes it possible to avoid or rule out certain routes which are not permissible or suitable for certain traffic, e.g. because of dangerous cargo on board the vehicle or a vehicle height which exceeds what is permissible on a certain section of road.

In certain embodiments the driver may also put in a calculated starting time for the journey. Planning may then be conducted in such a way that sections of road which are particularly liable to traffic congestion are avoided during traffic peaks, and scheduled bridge opening times and railway level crossings are also avoided. This makes it possible in certain embodiments for actual running times to be estimated in order to calculate the quickest itinerary on the basis of time of day. In certain embodiments it is also possible to incorporate in a calculation of estimated running time such factors as speed limits, roadworks, traffic lights, roundabouts and other hindrances.

The example illustrated shows length of journey, estimated fuel consumption and calculated running time for two alternative itineraries between a starting point and a destination, but is merely one example in certain embodiments. In other embodiments a different number of alternative itineraries, calculated lengths of journey, estimated fuel consumptions and/or calculated running times may appear. Other parameters which may be related to the itineraries may also appear in certain embodiments.

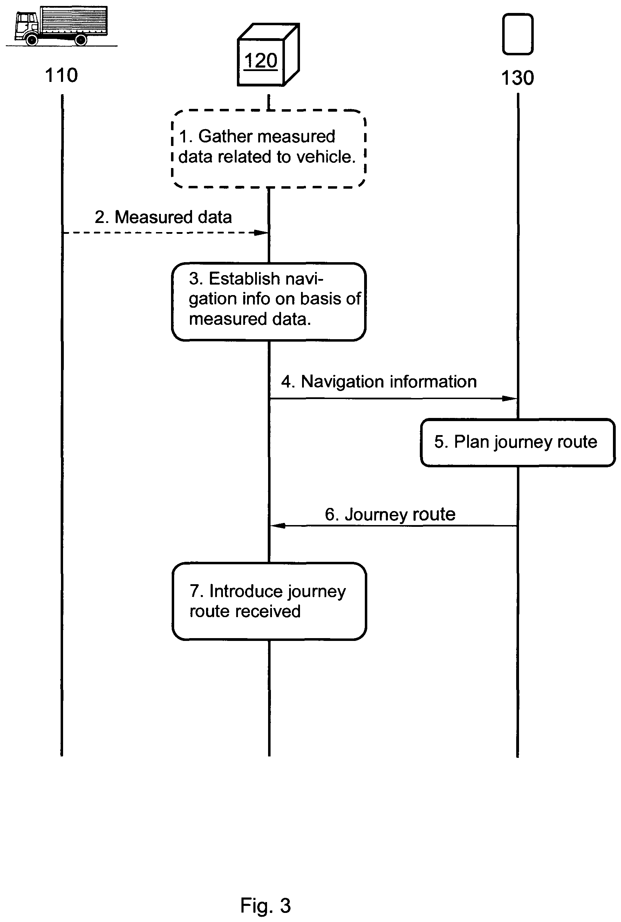

**Figure 3** depicts an example of how an itinerary may be planned for a vehicle 110 in a portable unit 130, from outside the vehicle 110.

As a first step, measured data relating to the vehicle 110 may be gathered in to the navigation unit 120 in certain embodiments. Such measured data may for example come from various sensors on board the vehicle and may refer to its configuration. These sensors and measured data may for example cover thermometer/temperature, air pressures in the vehicle's tyres, the vehicle's weight, including cargo, by measurement of axle pressures, but measured data may also comprise information stored in the vehicle, e.g. its length, height etc.

Some of this information from sensors on board the vehicle may for example be used to calculate air resistance and/or rolling resistance, which may then be used to calculate the vehicle's fuel consumption for the current itinerary or for a number of alternative itineraries.

The transfer of measured data on board the vehicle 110 may for example take place via a communication bus system comprising one or more communication buses for connecting a number of electronic control units (ECUs), or controllers, to various components and sensors at various locations on board.

The navigation unit 120 and said sensors are themselves adapted both to communicating with one another in order to receive signals and measured values and, where applicable, to triggering a measurement, e.g. at certain intervals of time. The navigation unit and the sensors are also adapted to communicating for example via the vehicle's communication buses, which may take the form of one or more from among a cable, a data bus, e.g. a CAN (controller area network) bus, a MOST (media oriented systems transport) bus, or some other bus configuration, or a wireless connection, e.g. according to any of the wireless communication technologies enumerated above.

However, measured data may also be taken from a positioning system such as a Global Positioning System (GPS), Gallileo Global Navigation Satellite System (GNSS), Globalnaya Navigatsionnaya Sputnikovaya Sistema (GLONASS) or the like which make it possible to determine the vehicle's current location in terms of longitude, latitude and altitude. Road distances on itineraries, topographical running conditions and the like may also be determined. In certain embodiments, values received from sensors, accelerometers, gyros and/or positioning systems may then be stored in a memory, with time information.

Measured data may be sent from the respective sensors to the navigation unit 120 either upon demand by the latter or at a certain time interval, in different embodiments.

The navigation unit 120 may then determine and/or calculate navigation information on the basis of this gathered measured data, possibly in conjunction with constant data of the vehicle such as its height. This makes it possible for example to calculate air resistance, rolling resistance and/or fuel consumption at certain speeds.

In certain embodiments this navigation information determined or calculated may then be transferred from the navigation unit 120 to a portable unit 130 which may for example take the form of the driver's mobile telephone, computer, surfboard or other similar portable unit with capability for executing a programme.

The navigation information may for example be transferred upon driver demand, via a wireless or wired interface, in different embodiments.

In certain embodiments it is also possible for further information related to the planned itinerary to be taken for example from an information database or the like, e.g. information about roadworks, carriageway hindrances, queuing, snow depth on roads and the like.

The driver may then plan the itinerary for the vehicle 110 in the portable unit 130 at a distance from the vehicle. He/she may thus compare various alternative travel routes and journey times/fuel consumptions pertaining to them in certain embodiments, and choose whichever route is most advantageous on a particular criterion. In certain alternative embodiments the itinerary which results in the shortest running time or the lowest fuel consumption or the shortest travelling distance may be chosen, without different alternatives being presented for the driver.

In certain embodiments, itinerary planning in the portable unit 130 may involve estimation of fuel consumption for one or more alternative itineraries.

The chosen itinerary is then transferred from the portable unit 130 to the navigation unit 120 via a wireless or wired interface, according to the invention. This may for example take place when the driver seats him/herself in the vehicle 110 to begin the journey to the destination. In certain embodiments this event may then trigger said transfer.

The navigation unit 120 then receives the chosen itinerary from the portable unit 130 and stores it in a memory in order to be able to begin and follow a route according to the planned itinerary.

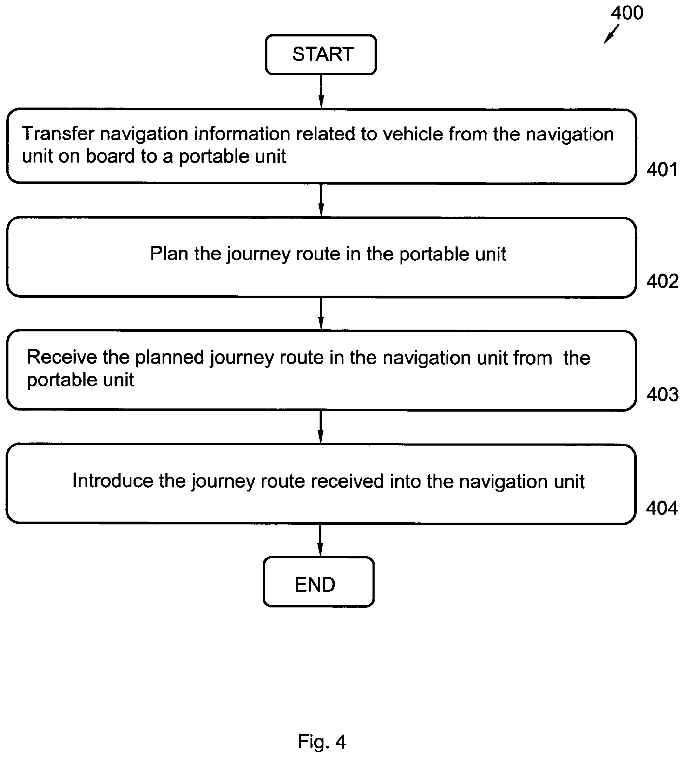

**Figure 4** illustrates an example of an embodiment of the invention in the form of a flowchart of a method 400 for itinerary planning for a vehicle 110.

The vehicle has a navigation unit 120 installed on board and adapted to gathering, collating and presenting navigation information. In certain embodiments this navigation information may be received from sensors on board the vehicle.

The navigation information, which comprises the vehicle's weight/length/ height, may in certain embodiments comprise for example map data, previous destinations and starting points, points of interest, tineraries, cargo weight, type of cargo, the vehicle's air friction, information from at least one sensor on board, or the like.

The object of the method 400 is to make it possible to plan the itinerary for the vehicle 110 in a portable unit 130 which may for example take the form of a driver's mobile telephone, computer, surfboard or similar portable device in certain embodiments. This makes it possible for itinerary planning to take place outside, and at a distance from, the vehicle.

To make it possible for itinerary planning for the vehicle 110 to take place in the portable unit 130 from outside the vehicle in a correct way, the method 400 may comprise a number of steps **401-404,** but it should be noted that certain of these steps may be conducted in a somewhat different chronological order than that indicated by the numerical sequence and that certain of them may be conducted in parallel with one another, in different embodiments. The method 400 comprises the following steps:

### Step 401

Navigation information related to the vehicle 110 is transferred from the navigation unit 120 on board the vehicle to a portable unit 130.

The transfer of navigation information related to the vehicle from the navigation unit 120 on board the vehicle to the portable unit 130 may in certain embodiments take place via a wireless interface based for example on any of the following technologies: Global System for Mobile Communications (GSM), Enhanced Data Rates for GSM Evolution (EDGE), Universal Mobile Telecommunications System (UMTS), Code Division Access (CDMA), (CDMA 2000), Time Division Synchronous CDMA (TD-SCDMA), Long Term Evolution (LTE); Wireless Fidelity (Wi-Fi), as defined by any of Institute of Electrical and Electronics Engineers (IEEE) standards 802.11 a, ac, b, g and/or n, Internet Protocol (IP), Bluetooth and/or Near Field Communication (NFC).

Transferring information between the navigation unit 120 on board the vehicle and the portable unit 130 via a wireless interface makes it possible for the transfer to take place without the driver having to place the portable unit at any particular location, the only requirement is a location where reception is good enough, e.g. in the driver's pocket.

The transfer of navigation information related to the vehicle from the navigation unit 120 on board to the portable unit 130 may in certain embodiments take place via a wired interface.

Such wired interface may for example be based on any of the following technologies on board the vehicle: Controller Area Network (CAN), Media Oriented Systems Transport (MOST), Ethernet; or outside the vehicle: Ethernet, Universal Serial Bus (USB), Serial RS232, FireWire, Thunderbolt.

In certain embodiments the transfer of navigation information related to the vehicle from the navigation unit 120 on board to the portable unit 130 may take place continuously, e.g. at a certain interval of time and/or when a triggering event occurs, e.g. the vehicle being started.

Continuous transfer of information may reduce the risk of the driver planning an itinerary on the mobile unit 130 without having access to the latest navigation information which is available in the vehicle's navigation system 120.

### Step 402

The itinerary for the vehicle 110 is planned in the portable unit 130.

The planning of the itinerary in the portable unit may take place at a location outside the vehicle.

In certain embodiments the itinerary planning in the portable unit 130 comprises input of starting point, input of one or more destinations, calculation of length of time and/or fuel consumption for one or more alternative itineraries between the starting point and at least one destination, choice of itinerary and/or input of one or more points of interest, or the like.

Itinerary planning in some other environment than the driver's cab is thus possible. It may for example take place in conjunction with another person who is outside the vehicle, resulting in increased flexibility in planning the journey. The actual (possibility of) change of environment may itself have a positive effect on the driver's general well-being, since taking a walk outside the vehicle may lead to increased oxygen intake and improved blood circulation. The driver will thus also have a change from the sedentary driving environment on board the vehicle where much of the working day is spent, as well as the possibility of a varied working posture, which may reduce ergonomic harm to the driver.

### Step 403

The planned itinerary 402 is received in the vehicle's navigation unit 120 from the portable unit 130.

The reception by the navigation unit 120 of the planned itinerary 402 from the portable unit 130 may in certain embodiments take place via a wireless interface based for example on any of the following technologies: Global System for Mobile Communications (GSM), Enhanced Data Rates for GSM Evolution (EDGE), Universal Mobile Telecommunications System (UMTS), Code Division Access (CDMA), (CDMA 2000), Time Division Synchronous CDMA (TD-SCDMA), Long Term Evolution (LTE); Wireless Fidelity (Wi-Fi), as defined by any of Institute of Electrical and Electronics Engineers (IEEE) standards 802.11 a, ac, b, g and/or n, Internet Protocol (IP), Bluetooth and/or Near Field Communication (NFC).

The reception by the navigation unit of the planned itinerary from the portable unit may in certain embodiments take place via a wired interface.

Such wired interface may for example be based on any of the following technologies on board the vehicle: Controller Area Network (CAN), Media Oriented Systems Transport (MOST), Ethernet; or outside the vehicle: Ethernet, Universal Serial Bus (USB), Serial RS232, FireWire, Thunderbolt.

In certain embodiments the reception by the navigation unit 120 of the planned itinerary 402 from the portable unit 130 may take place at regular intervals of time and/or when a triggering event occurs.

### Step 404

The itinerary received 403 is introduced into a memory unit on board's navigation unit 120.

The itinerary received may then be presented on a viewing screen connected to the navigation unit.

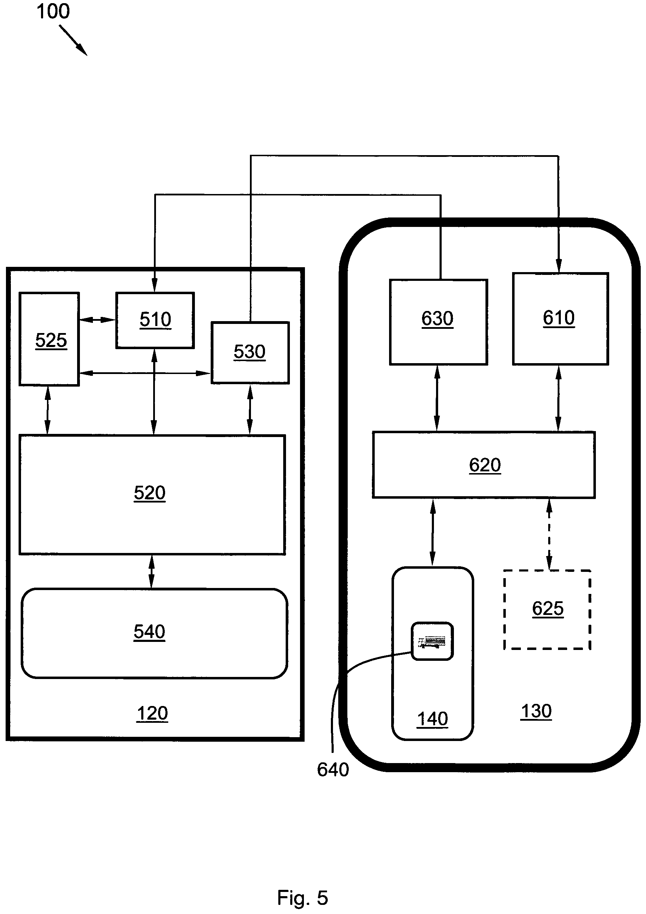

**Figure 5** illustrates an embodiment of a system 100 for itinerary planning for a vehicle 110 which has a navigation unit 120 installed on board and adapted to gathering, collating and presenting navigation information, in certain embodiments. The system 100 comprises also a portable unit 130.

The system 100 is configured to perform at least certain of the previously described method steps 401-404 which form part of the description of the method 400 for itinerary planning for a vehicle 110.

In order to be able to plan itineraries for the vehicle 110 in a correct way, the navigation unit 120 and the portable unit 130 each have a number of components described in more detail below. Certain of the units and/or components described will be present in some, but not necessarily all, embodiments. There may also be in the navigation unit 120 and the portable unit 130 further electronics which are not entirely necessary for understanding the method 400 according to steps 401-404 described above. For the sake of clarity, such further electronics have been omitted from Figure 5 to avoid making the invention unnecessarily difficult to understand.

The portable unit 130 which forms part of the system 100 is adapted to itinerary planning for the vehicle 110. This planning may be based on navigation information related to the vehicle which is transferred to the portable unit 130 from the vehicle's navigation unit 120. To this end, the navigation unit 120 has associated with it a transfer means **530** adapted to transferring to the portable unit 130 navigation information related to vehicle 110.

In certain embodiments the portable unit 130 itself has a receiving means **610** adapted to receiving the navigation information related to the vehicle 110 from the navigation unit's transfer means 530. This may take place via a wireless interface in certain embodiments.

The wireless network may for example be based on any of the following technologies: Global System for Mobile Communications (GSM), Enhanced Data Rates for GSM Evolution (EDGE), Universal Mobile Telecommunications System (UMTS), Code Division Access (CDMA), (CDMA 2000), Time Division Synchronous CDMA (TD-SCDMA), Long Term Evolution (LTE); Wireless Fidelity (Wi-Fi), as defined by any of Institute of Electrical and Electronics Engineers (IEEE) standards 802.11 a, ac, b, g and/or n, Internet Protocol (IP), Bluetooth and/or Near Field Communication (NFC), in different embodiments.

In certain other embodiments the portable unit 130 and the navigation unit 120 are arranged for communication and information transfer via a wired interface.

Such wired interface may for example be based on any of the following technologies on board the vehicle: Controller Area Network (CAN), Media Oriented Systems Transport (MOST), Ethernet; or outside the vehicle: Ethernet, Universal Serial Bus (USB), Serial RS232, FireWire, Thunderbolt.

The vehicle's navigation unit 120 is further provided with a receiving means 510 adapted to receiving the planned itinerary from the portable unit 130. The portable unit itself has a transfer means **630** for transferring the planned itinerary. This transfer may take place via a wireless or wired interface, in different embodiments.

The vehicle's navigation unit 120 which forms part of the system 100 is adapted to introducing the planned itinerary into a memory **525** in the navigation unit 120 so that viewing of the itinerary on a viewing screen **540** connected to the navigation unit is made possible by means of a processor circuit **520b** provided for the purpose.

The processor circuit 520 may for example take the form of one or more central processing units (CPUs), microprocessors or some other logic configured to interpret and carry out instructions and/or to read and write data. The processor circuit 520 may handle data for inflow, outflow or processing of data, comprising also data buffering, control functions and the like.

The viewing screen 540 may also be referred to as a computer screen, display or monitor, which is an output unit for displaying an electronically created text or image. The viewing screen 540 may also comprise a screen with cathode ray tube, a so-called CRT screen, in certain embodiments. In other embodiments it may take the form of liquid crystal displays (LCDs), plasma screens, SED (surface-conduction electron-emitter display) screens and/or OLEDs (organic light-emitting diodes), light emitting diodes (LEDs), thin film transistors (TFTs), to mention some different examples of viewing screens.

The memory unit 525 in the navigation unit 120 may in certain embodiments take the form of a storage medium for data. It may for example take the form of a memory card, USB memory, hard disc or other similar data storage unit, e.g. from among ROM (read-only memory), PROM (programmable read-only memory), EPROM (erasable PROM), flash memory, EEPROM (electrically erasable PROM) etc., in different embodiments.

The portable unit 130 which forms part of the system 100 is provided with a processor circuit **620** adapted to itinerary planning for the vehicle 110.

The processor circuit 620 may for example take the form of one or more central processing units (CPUs), microprocessors or some other logic configured to interpret and carry out instructions and/or to read and write data. The processor circuit 620 may handle data for inflow, outflow or processing of data, comprising also data buffering, control functions and the like.

The portable unit 130 takes the form in different embodiments of a mobile telephone, a computer, a handheld computer, a surfboard or some other similar portable unit with capability for executing a programme.

In certain alternative embodiments the portable unit 130 is provided with a memory unit **625** which serves as a storage medium for data. It may for example take the form of a memory card, USB memory, hard disc or other similar data storage unit, e.g. from among ROM (read-only memory), PROM (programmable read-only memory), EPROM (erasable PROM), flash memory, EEPROM (electrically erasable PROM) etc., in different embodiments.

The invention further comprises a programme in a navigation unit 120, installed in a vehicle 110, for participation in itinerary planning for the vehicle. The programme is adapted to conducting the method 400 according to at least one of the previously described steps 401, 403-404 when the programme is executed in a processor circuit 520 in the navigation unit.

The programme in the navigation unit 120 according to the invention caters for gathering, collation and presentation of navigation information. It further caters for transferring navigation information related to the vehicle from the navigation unit 120 on board to a portable unit 130. The programme also caters for receiving a planned itinerary from the portable unit. The programme caters also for introducing the itinerary received into the navigation unit.

The method 400 according to steps 401, 403-404 for participation in itinerary planning for the vehicle 110 may be implemented by one or more processor circuits 520 in the navigation unit 120, in conjunction with computer programme code for performing one or more or certain or all of the steps 401, 403-404 described above. A computer programme comprising instructions for performing steps 401, 403-404 can therefore do so when the programme is loaded in the processor circuit 520. The invention further comprises a programme in a portable unit 130 for itinerary planning for a vehicle 110 which is provided with a navigation unit 120.

The programme is adapted to conducting the method 400 according to the previously described step 402 when the programme is executed in a processor circuit 620 in the portable unit 130.

The programme in the portable unit 130 according to the invention caters for receiving navigation information related to the vehicle 110 from the vehicle's navigation unit 120. It further caters for planning the vehicle's itinerary. It caters also for transferring the planned itinerary to the navigation unit via a wireless or wired interface, in different embodiments.

In certain embodiments this programme in the portable unit 130 is adapted to being installed on the portable unit, e.g. via a wireless interface, in which case a short-cut **640** to the programme is placed on the portable unit's viewing screen 140 in conjunction with downloading the programme.

The receiving means 510, 610 and/or transfer means 530, 630 described and discussed above may in certain embodiments take the form of separate transmitters and receivers. However, the receiving means 510 and the transfer means 530 in the navigation unit 120 may in certain embodiments take the form of a transceiver adapted to sending and receiving radio signals, in which case parts of the structure, e.g. the antenna, are common to both transmitter and receiver. The receiving means 610 and the transfer means 630 in the portable unit 130 may in certain embodiments take the form of a transceiver adapted to sending and receiving radio signals. These communications may be suitable for wireless information transfer via radio waves, WLAN, Bluetooth or infra-red transmitter/receiver modules. In certain embodiments, however, the receiving means 510, 610 or the transfer means 530, 630 may be particularly suitable for wired information exchange.

Some embodiments of the invention comprise also a vehicle 110 which has a navigation unit 120 installed on board and adapted to gathering, collating and presenting navigation information which is part of the system 100 described above for conducting the method 400 described above.

In certain alternative embodiments the navigation unit 120 on board the vehicle 110 also comprises, or is connectable to, a unit for determining geographical location, e.g. a GPS module. This alternative unit is particularly suited to determining, and making it possible to store and mark, the vehicle's current location.

## Claims

1. A method (400) for itinerary planning for a vehicle (110) which has a navigation unit (120) installed on board and adapted to gathering, collating and presenting navigation information comprising the vehicle's weight/ length/ height, which method (400) comprises:
transferring (401) the navigation information related to the vehicle (110) comprising the vehicle's weight/length/height from the navigation unit (120) on board the vehicle (110) to a portable unit (130),
planning (402) the itinerary in the portable unit (130) at a location outside the vehicle based on the transferred (401) navigation information, by inputting starting point, inputting destination, calculating length of time and/ or fuel consumption for at least one itinerary,
receiving (403) the planned itinerary (402) in the vehicle's navigation unit (120) from the portable unit (130) and
introducing (404) the itinerary received (403) into the vehicle's navigation unit (120).

2. A method (400) according to claim 1, in which the navigation information comprises map data, previous destinations and starting points, points of interest, itineraries, cargo weight, type of cargo, the vehicle's air friction, information from at least one sensor on board the vehicle (110), or the like.

3. A method (400) according to any one of claims 1-2, in which the planning (402) of the itinerary in the portable unit (130) comprises input of starting point, input of one or more destinations for the route, calculation of length of time and/or fuel consumption for one or more alternative itineraries between the starting point and at least one destination, choice of itinerary, and/or input of one or more points of interest, or the like.

4. A method (400) according to any one of claims 1-3, in which transferring (401) navigation information related to the vehicle (110) from the navigation unit (120) on board the vehicle (110) to the portable unit (130), and receiving (403) the planned itinerary (402) sent from the portable unit (130) to the vehicle's navigation unit (120), take place via a wireless interface, based for example on any of the following technologies: Global System for Mobile Communications (GSM), Enhanced Data Rates for GSM Evolution (EDGE), Universal Mobile Telecommunications System (UMTS), Code Division Access (CDMA), (CDMA 2000), Time Division Synchronous CDMA (TD-SCDMA), Long Term Evolution (LTE); Wireless Fidelity (Wi-Fi), as defined by any of Institute of Electrical and Electronics Engineers (IEEE) standards 802.11 a, b, g and/or n, Internet Protocol (IP), Bluetooth and/or Near Field Communication (NFC).

5. A method (400) according to any one of claims 1-3, in which transferring (401) navigation information related to the vehicle (110) from the navigation unit (120) on board the vehicle (110) to the portable unit (130), and receiving (403) the planned itinerary (402) sent from the portable unit (130) to the vehicle's navigation unit (120), take place via a wired interface, based for example on any of the following technologies on board the vehicle (110): Controller Area Network (CAN), Media Oriented Systems Transport (MOST), Ethernet; or outside the vehicle (110): Ethernet, Universal Serial Bus (USB), Serial RS232, FireWire, Thunderbolt.

6. A method (400) according to any one of claims 1 -5, in which transferring (401) navigation information related to the vehicle (110) from the navigation unit (120) on board the vehicle (110) to the portable unit (130), and receiving (403) the planned itinerary (402) sent from the portable unit (130) to the vehicle's navigation unit (120), take place at regular intervals of time and/or when a triggering event occurs.

7. A system (100) for itinerary planning for a vehicle (110), comprising a navigation unit (120) installed on board the vehicle (110) and adapted to gathering, collating and presenting navigation information comprising the vehicle's weight/ length/ height, which system (100) comprises:
a transfer means (530) associated with the vehicle's navigation unit (120) and adapted to transferring to the portable unit (130) the navigation information related to the vehicle (110) comprising the vehicle's weight/length/height,
a portable unit (130) adapted to planning the itinerary for the vehicle (110) based on the transferred navigation information, at a location outside the vehicle, by inputting starting point, inputting destination, calculating length of time and/ or fuel consumption for at least one itinerary,
a receiving means (510) connected to the vehicle's navigation unit (120) and adapted to receiving the planned itinerary from the portable unit (130), and
wherein the vehicle's navigation unit (120) is adapted to introducing the planned itinerary into a memory (525) in the navigation unit (120) so that it is possible to view the itinerary on a viewing screen (540) connected to the navigation unit (120).

8. A system (100) according to claim 7, in which the portable unit (130) comprises
a processor circuit (620) adapted to planning a itinerary for a vehicle (110),
a receiving means (610) adapted to receiving navigation information related to the vehicle (110) from the vehicle's navigation unit (120),
a transfer means (630) adapted to transferring the planned itinerary to the vehicle's navigation unit (120).

9. A system (100) according to claim 7 or claim 8, in which the portable unit (130) takes the form of a mobile telephone, a computer, a handheld computer, a surfboard or other similar portable unit with capability for executing a programme for itinerary planning outside the vehicle (110).

10. A programme in a navigation unit (120) installed in a vehicle (110) for participation in itinerary planning for the vehicle (110) according to a method of any one of claims 1-6, made outside the vehicle (110), which programme comprises:
gathering, collating and presenting navigation information comprising the vehicle's weight/ length/ height,
transferring navigation information related to the vehicle (110) from the navigation unit (120) on board the vehicle (110) to a portable unit (130),
receiving a planned itinerary from the portable unit (130), and
introducing the itinerary received into the vehicle's navigation unit (120).

11. A programme in a portable unit (130), for itinerary planning according to a method of any one of claims 1-6 for a vehicle (110) which has a navigation unit (120) installed on board, which programme comprises:
receiving navigation information related to the vehicle (110) comprising the vehicle's weight/length/height from the vehicle's navigation unit (120),
planning the vehicle's, based on the received navigation information, at a location outside the vehicle, by inputting starting point, inputting destination, calculating length of time and/ or fuel consumption for at least one itinerary, and
transferring the planned itinerary to the vehicle's navigation unit (120).

12. A programme according to claim 11, such that the programme is adapted to being installed on the portable unit (130) and that a short-cut (640) to the programme is placed on a viewing screen (140) of the portable unit (130) in conjunction with downloading the programme.

13. A vehicle (110) which has a navigation unit (120) installed on board and adapted to gathering, collating and presenting navigation information comprising the vehicle's weight/ length/ height which is part of a system (100) according to any one of claims 7-9 and is adapted to conducting a method (400) according to any one of claims 1-6.

## Patentansprüche

1. Verfahren (400) zur Routenplanung für ein Fahrzeug (110), das eine an Bord installierte Navigationseinheit (120) aufweist, die dazu eingerichtet ist, Navigationsinformation enthaltend das Gewicht, die Länge und die Höhe des Fahrzeugs zu sammeln, zu sortieren und darzustellen, wobei das Verfahren (400) umfasst:
Übertragen (401) der das Fahrzeug (110) betreffenden Navigationsinformation mit dem Gewicht, der Länge und der Höhe des Fahrzeugs von der Navigationseinheit (120) an Bord des Fahrzeugs (110) zu einer tragbaren Einheit (130),
Planen (402) des Route in der tragbaren Einheit (130) an einem Ort außerhalb des Fahrzeugs basierend auf der übertragenen (401) Navigationsinformation durch Eingeben eines Startpunktes, einer Ziels und Berechnen einer Zeitdauer und/oder eines Kraftstoffverbrauchs für zumindest eine Route,
Empfangen (403) der geplanten Route (402) in der Navigationseinheit (120) des Fahrzeugs von der tragbaren Einheit (130) und
Einspeisen (404) der empfangenen Route (403) in die Navigationseinheit (120) des Fahrzeugs.

2. Verfahren (400) nach Anspruch 1, wobei die Navigationsinformation Kartendaten, frühere Ziele und Startpunkte, Points of Interest, Routen, Frachtgewicht, Frachtart, den Fahrzeugluftwiderstand, Information von wenigstens einem bordseitigen Sensor des Fahrzeugs (110) oder ähnliches umfasst.

3. Verfahren (400) nach einem der Ansprüche 1 bis 2, wobei das Planen (402) der Route in der tragbaren Einheit (130) das Eingeben eines Startpunktes, eine Eingabe eines oder mehrerer Ziele für die Route, eine Berechnung der Zeitdauer und/oder des Kraftstoffverbrauchs für eine oder mehrere alternative Routen zwischen dem Startpunkt und zumindest einem Ziel, eine Auswahlmöglichkeit der Route und/oder eine Eingabe eines oder mehrerer Points of Interest oder ähnliches umfasst.

4. Verfahren (400) nach einem der Ansprüche 1 bis 3, wobei das Übertragen (401) von das Fahrzeug (110) betreffender Navigationsinformation von der Navigationseinheit (120) an Bord des Fahrzeugs (110) zu der tragbaren Einheit (130) und das Empfangen (403) der geplanten Route (402), die von der tragbaren Einheit (130) an die Navigationseinheit (120) des Fahrzeugs gesendet wurde, mittels einer drahtlosen Schnittstelle stattfinden, beispielsweise auf der Basis irgendeiner der folgenden Technologien: Global System for Mobile Communications (GSM), Enhanced Data Rates for GSM Evolution (EDGE), Universal Mobile Telecommunications System (UMTS), Code Division Access (CDMA), (CDMA 2000), Time Division Synchronous CDMA (TD-SCDMA), Long Term Evolution (LTE); Wireless Fidelity (Wi-Fi) wie festgelegt durch irgendeine der Normen des Institute of Electrical and Electronics Engineers (IEEE) 802.11 a, b, g und/oder n, Internet-Protokoll (IP), Bluetooth und/oder Nahfeldkommunikation (NFC).

5. Verfahren (400) nach einem der Ansprüche 1 bis 3, wobei das Übertragen (401) von das Fahrzeug (110) betreffender Navigationsinformation von der Navigationseinheit (120) an Bord des Fahrzeugs (110) zu der tragbaren Einheit (130) und das Empfangen (403) der geplanten Route (402), die von der tragbaren Einheit (130) an die Navigationseinheit (120) des Fahrzeugs gesendet wurde, mittels einer drahtgebundenen Schnittstelle stattfinden, beispielsweise auf der Basis irgendeiner der folgenden Technologien an Bord des Fahrzeugs (110): Controller Area Network (CAN), Media Oriented Systems Transport (MOST), Ethernet; oder außerhalb des Fahrzeugs (110): Ethernet, Universal Serial Bus (USB), seriell RS232; FireWire, Thunderbolt.

6. Verfahren (400) nach einem der Ansprüche 1 bis 5, wobei das Übertragen (401) von das Fahrzeug (110) betreffender Navigationsinformation von der Navigationseinheit (120) an Bord des Fahrzeugs (110) zu der tragbaren Einheit (130) und das Empfangen (403) der geplanten Route (402), die von der tragbaren Einheit (130) an die Navigationseinheit (120) des Fahrzeugs gesendet wurde, in regelmäßigen Zeitintervallen stattfindet und/oder wenn ein auslösendes Ereignis eintritt.

7. System (100) zur Routenplanung für ein Fahrzeug (110), mit einer an Bord des Fahrzeugs (110) installierten Navigationseinheit (120), die dazu eingerichtet ist, Navigationsinformation enthaltend das Gewicht, die Länge und die Höhe des Fahrzeugs zu sammeln, zu sortieren und darzustellen, wobei das System (100) aufweist:
eine Übertragungseinrichtung (530), die der Navigationseinheit (120) des Fahrzeugs zugehörig und dazu eingerichtet ist, die das Fahrzeug (110) betreffende Navigationsinformation mit dem Gewicht, der Länge und der Höhe des Fahrzeugs an die tragbare Einheit (130) zu übertragen,
eine tragbare Einheit (130), die dazu eingerichtet ist, die Route für das Fahrzeug (110) basierend auf der übertragenen Navigationsinformation an einem Ort außerhalb des Fahrzeugs zu planen durch Eingeben eines Startpunktes, eines Ziels, Berechnen einer Zeitdauer und/oder eines Kraftstoffverbrauchs für zumindest eine Route,
eine Empfangseinrichtung (510), die mit der Navigationseinheit (120) des Fahrzeugs verbunden und dazu eingerichtet ist, die geplante Route von der tragbaren Einheit (130) zu empfangen, und
wobei die Navigationseinheit (120) des Fahrzeugs dazu eingerichtet ist, die geplante Route in einen Speicher (525) in der Navigationseinheit (120) einzubringen, so dass es möglich ist, die Route auf einem mit der Navigationseinheit (120) verbundenen Bildschirm (540) zu betrachten.

8. System (100) nach Anspruch 7, wobei die tragbare Einheit (130) aufweist
einen Prozessorschaltkreis (620), der zum Planen einer Route für ein Fahrzeug (110) eingerichtet ist,
eine Empfangseinrichtung (610), die zum Empfangen von das Fahrzeug (110) betreffender Navigationsinformation von der Navigationseinheit (120) des Fahrzeugs eingerichtet ist,
eine Übertragungseinrichtung (630), die zum Übertragen der geplanten Route an die Navigationseinheit (120) des Fahrzeugs eingerichtet ist.

9. System (100) nach Anspruch 7 oder Anspruch 8, wobei die tragbare Einheit (130) die Form eines Mobiltelefons, eines Computers, eines handgehaltenen Computers, eines Surfgeräts oder einer anderen ähnlichen tragbaren Einheit mit der Fähigkeit zum Ausführen eines Programms zur Routenplanung außerhalb des Fahrzeugs (110) annimmt.

10. Programm in einer in einem Fahrzeug (110) installierten Navigationseinheit (120) zur Beteiligung an einer Routenplanung für das Fahrzeug (110) gemäß einem Verfahren nach einem der Ansprüche 1 bis 6, die außerhalb des Fahrzeugs (110) stattfindet, wobei das Programm umfasst:
Sammeln, Sortieren und Darstellen von Navigationsinformation enthaltend das Gewicht, die Länge und die Höhe des Fahrzeugs,
Übertragen von das Fahrzeug (110) betreffender Navigationsinformation von der Navigationseinheit (120) an Bord des Fahrzeugs (110) an eine tragbare Einheit (130),
Empfangen einer geplanten Route von der tragbaren Einheit (130), und
Einspeisen der empfangenen Route in die Navigationseinheit (120) des Fahrzeugs.

11. Programm in einer tragbaren Einheit (130) zur Routenplanung gemäß einem Verfahren nach einem der Ansprüche 1 bis 6 für ein Fahrzeug (110), welches eine bordseitige Navigationseinheit (120) aufweist, wobei das Programm umfasst:
Empfangen von das Fahrzeug (110) betreffender Navigationsinformation enthaltend das Gewicht, die Länge und die Höhe des Fahrzeugs von der Navigationseinheit (120) des Fahrzeugs,
Planen der Route des Fahrzeugs, basierend auf der empfangenen Navigationsinformation, an einem Ort außerhalb des Fahrzeugs durch Eingeben eines Startpunktes, eines Ziels, Berechnen einer Zeitdauer und/oder eines Kraftstoffverbrauchs für zumindest eine Route, und
Übertragen der geplanten Route an die Navigationseinheit (120) des Fahrzeugs.

12. Programm nach Anspruch 11, wobei das Programm dazu eingerichtet ist, auf der tragbaren Einheit (130) installiert zu werden und wobei eine Abkürzung (640) zu dem Programm auf einem Bildschirm (140) der tragbaren Einheit (130) in Verbindung mit einem Herunterladen des Programms platziert wird.

13. Fahrzeug (110), das eine bordseitige Navigationseinheit (120) aufweist, die dazu eingerichtet ist, Navigationsinformation enthaltend das Gewicht, die Länge und die Höhe des Fahrzeugs zu sammeln, zu sortieren und darzustellen und die Teil eines Systems (100) gemäß einem der Ansprüche 7 bis 9 ist und dazu eingerichtet ist, ein Verfahren (400) nach einem der Ansprüche 1 bis 6 auszuführen.

## Revendications

1. Procédé (400) pour la planification d'itinéraire pour un véhicule (110) qui dispose d'une unité de navigation (120) installée à bord et adaptée à la collecte, au recueil et à la présentation des informations de navigation comprenant le poids/la longueur/la hauteur du véhicule, lequel procédé (400) comprend :
le transfert (401) des informations de navigation liées au véhicule (110) comprenant le poids/la longueur/la hauteur du véhicule de l'unité de navigation (120) à bord du véhicule (110) à une unité portable (130),
la planification (402) de l'itinéraire dans l'unité portable (130) à un emplacement à l'extérieur du véhicule, basé sur les informations de navigation transférées (401), en introduisant le point de départ, en introduisant la destination, en calculant la durée et/ou la consommation de carburant pour au moins un itinéraire,
la réception (403) de l'itinéraire planifié (402) dans l'unité de navigation du véhicule (120) de l'unité portable (130) et
l'introduction (404) de l'itinéraire reçu (403) dans l'unité de navigation du véhicule (120).

2. Procédé (400) selon la revendication 1, dans lequel les informations de navigation comprennent les données cartographiques, les destinations précédentes et les points de départ, les points d'intérêt, les itinéraires, le poids de cargaison, le type de cargaison, la friction d'air du véhicule, les informations d'au moins un capteur à bord du véhicule (110), ou similaires.

3. Procédé (400) selon l'une quelconque des revendications 1 à 2, dans lequel la planification (402) de l'itinéraire dans l'unité portable (130) comprend l'entrée du point de départ, l'entrée d'une ou de plusieurs destinations pour la route, le calcul de la durée et/ou de la consommation de carburant pour un ou plusieurs itinéraires alternatifs entre le point de départ et au moins une destination, le choix de l'itinéraire et/ou l'entrée d'un ou de plusieurs points d'intérêt, ou similaires.

4. Procédé (400) selon l'une quelconque des revendications 1 à 3, dans lequel le transfert (401) des informations de navigation liées au véhicule (110) de l'unité de navigation (120) à bord du véhicule (110) à l'unité portable (130), et la réception (403) de l'itinéraire planifié (402) envoyé depuis l'unité portable (130) à l'unité de navigation du véhicule (120), se déroule via une interface sans fil, sur base par exemple de l'une des technologies suivantes : Système mondial de communications mobiles (GSM), débit de données amélioré pour l'évolution de GSM (EDGE), Système de télécommunications universel mobiles (UMTS), accès par répartition de code (CDMA), (CDMA 2000), CDMA synchrone par répartition de temps (TD-SCDMA), évolution à long terme (LTE), Fidélité sans fil (Wi-Fi), tel que défini par les normes IEEE (Institute of Electrical and Electronics Engineers) 802.11 a, b, g et/ou n, Protocole internet (IP), Bluetooth et/ou Communication en champ proche (NFC).

5. Procédé (400) selon l'une quelconque des revendications 1 à 3, dans lequel le transfert (401) des informations de navigation relatives au véhicule (110) de l'unité de navigation (120) à bord du véhicule (110) à l'unité portable (130), et la réception (403) de l'itinéraire planifié (402) envoyé depuis l'unité portable (130) à l'unité de navigation du véhicule (120), se déroule via une interface câblée, sur base par exemple de l'une des technologies suivantes à bord du véhicule (110) : Réseau de zone de contrôleur (CAN), Transport de systèmes orientés de médias (MOST), Ethernet ou à l'extérieur du véhicule (110) : Ethernet, Bus série universel (USB), Série RS232, Firewire, Thunderbolt.

6. Procédé (400) selon l'une quelconque des revendications 1 à 5, dans lequel le transfert (401) des informations de navigation liées au véhicule (110) de l'unité de navigation (120) à bord du véhicule (110) à l'unité portable (130), et la réception (403) de l'itinéraire planifié (402) envoyé depuis l'unité portable (130) à l'unité de navigation du véhicule (120), a lieu à intervalles réguliers et/ou lorsqu'un événement déclencheur se produit.

7. Système (100) pour la planification d'itinéraire pour un véhicule (110), comprenant une unité de navigation (120) installée à bord du véhicule (110) et adaptée à la collecte, au recueil et à la présentation des informations de navigation comprenant le poids/la longueur/la hauteur du véhicule, lequel système (100) comprend :
des moyens de transfert (530) associé à l'unité de navigation du véhicule (120) et adapté au transfert vers l'unité portable (130) les informations de navigation liées au véhicule (110) comprenant le poids/la longueur/la hauteur du véhicule,
unité portable (130) adaptée à la planification de l'itinéraire pour le véhicule (110) basée sur les informations de navigation transférées, à un emplacement hors du véhicule, en introduisant le point de départ, en introduisant la destination, en calculant la durée et/ou la consommation de carburant pour au moins un itinéraire,
des moyens de réception (510) connectés à l'unité de navigation du véhicule (120) et adaptés à la réception de l'itinéraire planifié de l'unité portable (130), et dans lequel l'unité de navigation du véhicule (120) est adaptée à l'introduction de l'itinéraire planifié dans une mémoire (525) dans l'unité de navigation (120) afin qu'il soit possible d'afficher l'itinéraire sur un écran de visualisation (540) connecté à l'unité de navigation (120).

8. Système (100) selon la revendication 7, dans lequel l'unité portable (130) comprend
un circuit de processeur (620) adapté à la planification d'un itinéraire pour un véhicule (110),
des moyens de réception (610) adaptés à la réception d'informations de navigation liées au véhicule (110) à partir de l'unité de navigation du véhicule (120),
des moyens de transfert (630) adaptés au transfert de l'itinéraire planifié vers l'unité de navigation du véhicule (120).

9. Système (100) selon la revendication 7 ou selon la revendication 8, dans lequel l'unité portable (130) prend la forme d'un téléphone portable, d'un ordinateur, d'un ordinateur portable, d'une carte pour surfer ou d'une autre unité portative similaire avec la capacité d'exécuter un programme pour la planification d'itinéraire à l'extérieur du véhicule (110).

10. Programme dans une unité de navigation (120) installé dans un véhicule (110) pour la participation à la planification d'itinéraire pour le véhicule (110) selon un procédé selon l'une quelconque des revendications 1 à 6, réalisé en dehors du véhicule (110), lequel programme comprend :
la collecte, le recueil et la présentation des informations de navigation comprenant le poids/la longueur/la hauteur du véhicule,
le transfert d'informations de navigation liées au véhicule (110) de l'unité de navigation (120) à bord du véhicule (110) vers une unité portable (130),
la réception d'un itinéraire planifié de l'unité portable (130), et
l'introduction de l'itinéraire reçu dans l'unité de navigation du véhicule (120).

11. Programme dans une unité portable (130), pour la planification d'itinéraire selon un procédé selon l'une quelconque des revendications 1 à 6, pour un véhicule (110) qui possède une unité de navigation (120) installée à bord, lequel programme comprenant
la réception des informations de navigation liées au véhicule (110) comprenant le poids/la longueur/la hauteur du véhicule de l'unité de navigation du véhicule (120),
la planification du véhicule, sur la base des informations de navigation reçues, à un emplacement hors du véhicule, en introduisant le point de départ, en introduisant la destination, en calculant la durée et/ou la consommation de carburant pour au moins un itinéraire, et
le transfert de l'itinéraire planifié vers l'unité de navigation du véhicule (120).

12. Programme selon la revendication 11, de telle sorte que le programme soit adapté à l'installation sur l'unité portable (130) et qu'un raccourci (640) au programme est placé sur un écran de visualisation (140) de l'unité portable (130) en conjonction avec le téléchargement du programme.

13. Véhicule (110) doté d'une unité de navigation (120) installée à bord et adapté à la collecte, au recueil et à la présentation des informations de navigation comprenant le poids/la longueur/la hauteur du véhicule qui fait partie d'un système (100) selon l'une quelconque des revendications 7 à 9, et est adapté à la conduite d'un procédé (400) selon l'une quelconque des revendications 1 à 6.
